# EUROPEAN PATENT APPLICATION

(11) **EP 2 352 286 A1**
(43) Date of publication of application: **03.08.2011**
(21) Application number: 10170180.3
(22) Date of filing: 20.07.2010
(51) Int. Cl.: H04N 5/76, H04N 5/781

(54) **A recording control apparatus and a recording control method**

(30) Priority: 25.12.2009 JP 2009294254
(71) Applicant: Kabushiki Kaisha Toshiba, Tokyo 105-8001 (JP)
(72) Inventor: Tsuchida, Shunichi, Minato-ku Tokyo (JP)
(74) Representative: Henkel, Feiler & Hänzel

(57) **Abstract**

In general, according to one embodiment, a recording control apparatus includes a recording control module. The recording control module is configured to detect operation time information of each of a plurality of storage media, to determine a given storage medium having a relatively long remaining lifetime from among the plurality of storage media based on the operation time information, and to control the given storage medium to preferentially record contents. The operation time information includes time information of idling condition of the each of plurality of storage media.

## Description

### BACKGROUND

### 1. Field

Embodiments described herein relate generally to a recording control apparatus and a recording control method which can record contents in multiple storage media.

### 2. Description of the Related Art

Recording/playback apparatus capable of recording and playing back digital broadcast programs have come into wide use. For example, recording/playback apparatus record digital broadcast programs using a storage medium such as an HDD (hard disk drive), a DVD (digital versatile disc), or a nonvolatile memory. The storage capacities of storage media such as HDDs and nonvolatile memories are increasing year by year. As a result, recording/playback apparatus and TV receivers having a recording function that use such a storage medium can record a large number of programs.

There is a general tendency that such storage media become more prone to fail and are shortened in lifetime as the accumulative operation time increases.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
Fig. 1 is an exemplary drawing showing a recording control apparatus according to an embodiment;
Fig. 2 is an exemplary drawing showing a main signal processing system of the recording control apparatus according to the embodiment; and
Figs. 3A to 3D are exemplary drawings explaining examples of control for a recording operation of the recording control apparatus according to the embodiment.

### DETAILED DESCRIPTION

In general, according to one embodiment, a recording control apparatus includes a recording control module. The recording control module is configured to detect operation time information of each of a plurality of storage media, to determine a given storage medium having a relatively long remaining lifetime from among the plurality of storage media based on the operation time information, and to control the given storage medium to preferentially record contents. The operation time information includes time information of idling condition of the each of plurality of storage media.

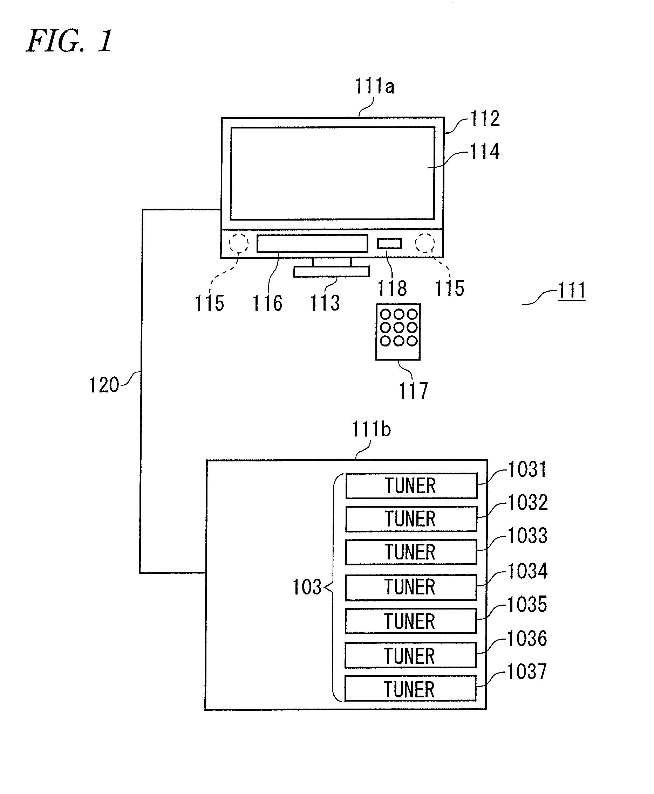

One embodiment of the invention will be hereinafter described with reference to the drawings. Fig. 1 schematically shows an appearance of a TV broadcast receiving apparatus 111 according to an embodiment. The TV broadcast receiving apparatus 111 includes a video/audio output device 111 a and a broadcast receiving apparatus 111 b (information recording apparatus). Although as shown in Fig. 1 the embodiment is directed to a two-piece-type digital TV broadcast receiving system in which the video/audio output device 111a and the broadcast receiving apparatus 11 1b are connected to each other by a cable 120 (e.g., HDMI cable), the invention is not limited to such a case. For example, a TV broadcast receiving apparatus may be configured in such a manner that the video/audio output device 111a and the broadcast receiving apparatus 11 1b are housed in a single cabinet.

The video/audio output device 111a has a thin cabinet 112 and a support stage 113 for supporting the cabinet 112 which is erected. The cabinet 112 houses a video display module 114 which is a flat-panel display having a liquid crystal panel or a plasma display panel, speakers 115, a manipulation module 116, a remote control light receiving module 118 for receiving manipulation information that is transmitted from a remote controller 117, and other components.

The broadcast receiving apparatus 111b is equipped with a tuner unit 103, which includes tuners 1031-1036 for the terrestrial digital TV broadcast and a tuner 1037 for the BS/CS digital TV broadcast.

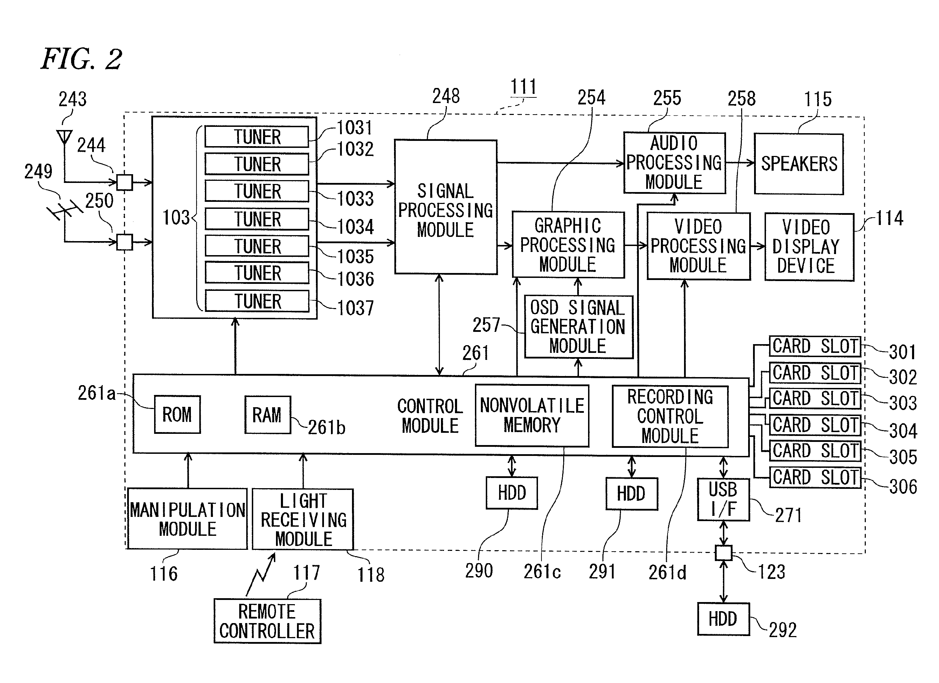

Fig. 2 shows an example main signal processing system relating to the invention of the TV broadcast receiving apparatus 111. Satellite digital TV broadcast signals received by a BS/CS digital broadcast receiving antenna 243 are supplied via an input terminal 244 to the satellite digital broadcast tuner 1037, which tunes in to a broadcast signal on a desired channel. The broadcast signal selected by the tuner 1037 is supplied to a PSK (phase shift keying) demodulation module (not shown), which demodulates it into a transport stream (TS). The transport stream is supplied to a TS decoding module (not shown), which decodes it into a digital video signal, audio signal, data signal, etc., which are output to a signal processing module 248.

Terrestrial digital TV broadcast signals received by a terrestrial broadcast receiving antenna 249 are supplied via an input terminal 250 to the terrestrial digital broadcast tuners 1031-1036, which tune into broadcast signals on desired channels. The broadcast signals selected by the tuners 1031-1036 are supplied to an OFDM (orthogonal frequency division multiplexing) demodulation module (not shown), which demodulates them into transport streams (TSs). Each transport stream is supplied to the TS decoding module, which decodes it into a digital video signal, audio signal, data signal, etc., which are output to the signal processing module 248.

Terrestrial analog TV broadcast signals received by the terrestrial broadcast receiving antenna 249 are supplied via the input terminal 250 to a terrestrial analog broadcast tuner (not shown), which tunes in to a broadcast signal on a desired channel. The broadcast signal selected by this tuner is supplied to an analog demodulation module (not shown), which demodulates it into an analog video signal and audio signal, which are output to the signal processing module 248.

In viewing of a TV program, the signal processing module 248 performs prescribed digital signal processing selectively on a digital video signal and audio signal supplied from the TS decoding module, and outputs resulting signals to a graphic processing module 254 and an audio processing module 255, respectively.

A control module 261 receives, from the signal processing module 248 or the TS decoding module, various data for acquisition of programs, electronic program guide (EPG) information, program attribute information (program genres etc.), subtitle information (service information; SI or PSI), etc. The control module 162 performs image generation processing for displaying an EPG or subtitles on the basis of the received pieces of information, and outputs resulting image information to the graphic processing module 254.

The graphic processing module 254 superimposes an on-screen display (OSD) signal generated by an OSD signal generation module 257 on the digital video signal that is supplied form the signal processing module 248, and outputs a resulting video signal.

The digital video signal that is output from the graphic processing module 254 is supplied to a video processing module 258. The video processing module 258 converts the received digital video signal into an analog video signal having such a format as to be displayable by the video display module 114. The analog video signal is output to and displayed by the video display module 114.

The audio processing module 255 converts the received digital audio signal into analog audio signals having such formats as to be reproducible by the speakers 115. The analog audio signals are output to and reproduced by the speakers 115.

Equipped with multiple storage media (e.g., HDDs 290 and 291), the TV broadcast receiving apparatus 111 can record program data in the HDDs 290 and 291. Also, the TV broadcast receiving apparatus 111 can playback a program recorded in the HDD 290 or 291 under the control of the control module 261. The HDDs 290 and 291 are provided inside the cabinet of the broadcast receiving apparatus 111b or the cabinet 112 of the video/audio output device 111a.

The TV broadcast receiving apparatus 111 is equipped with various interfaces. For example, the control module 261 is connected to a USB terminal 123 via a USB interface (I/F) 271. As a result, the control module 261 can exchange information via the USB I/F 271 with a device (e.g., external HDD 292) that is connected to the USB terminal 123. That is, the TV broadcast receiving apparatus 111 can record program data in the HDD 292 and play back program data stored in the HDD 292.

To accommodate scrambled broadcasts, the TV broadcast receiving apparatus 111 is equipped with multiple card slots 301-306 into which multiple descrambling cards for multiple channels are to be inserted. The card slot 301 is a slot for insertion of a BS/CS /terrestrial common card (red card). When a red card is inserted in the card slot 301, the tuner 1031 can descramble a terrestrial digital TV broadcast signal or the tuner 1037 can descramble a BS/CS digital TV broadcast signal.

The cards 302-306 are slots for insertion of terrestrial digital-broadcast-dedicated cards (blue cards). When blue cards are inserted in the respective card slots 302-306, the tuners 1032-1036 can descramble terrestrial digital TV broadcast signals. The control module 261 controls a playback or recording of resulting descrambled broadcast signals.

In the TV broadcast receiving apparatus 111, operations including various operations mentioned above (a program receiving operation, a program recording operation, and a playback of a recorded program) are supervised by the control module 261. By incorporating a CPU (Central Processing Unit), a microcomputer, or the like, the control module 261 is capable of receiving manipulation information from the manipulation unit 116 or the remote controller 117 and controlling the individual modules etc. so that the TV broadcast receiving apparatus 111 performs an operation that reflects the manipulation content.

The control module 261 is equipped with a ROM (Read Only Memory) 261a which is mainly stored with control programs to be run by the CPU or the like, a RAM (Random Access Memory) 261b which provides a work area for the CPU or the like, and a nonvolatile memory 261 c to be stored with various kinds of setting information, control information, etc.

The control module 261 includes a recording control module 261d. Content data such as a received program is recorded in a prescribed storage medium under the control of the recording control module 261d. The "prescribed storage medium" may be any of the HDDs 290-292, a memory card, the DVD disc that is set in a DVD recorder, the HDD provided in a DVD recorder, etc. Programs to be recorded are not limited to terrestrial and satellite broadcast programs and may be programs that are received over the Internet or what is called one-segment programs. When the broadcast of a target program is started, the recording control module 261 d performs a control according to recording reservation information that was input using the remote controller 117 or the like so that the reserved program will be recorded.

Under the control of the recording control module 261d used in the embodiment, the TV broadcast receiving apparatus 111 can record, automatically and simultaneously, programs on multiple channels in a designated time slot (e.g., one week). This kind of simultaneous recording of programs on multiple channels is called multiple simultaneous recording or multiple simultaneous automatic recording. In the multiple simultaneous recording, programs on multiple channels in a designated time slot are recorded automatically and simultaneously and programs that were recorded before the designated time slot (for example, programs that were recorded one week ago) are deleted (i.e., overwritten by new programs). To realize the multiple simultaneous recording by receiving broadcast waves on multiple channels simultaneously, the TV broadcast receiving apparatus 111 is provided with the multiple tuners 1031-1037 which correspond to the multiple respective channels.

The recording control module 261 d controls a recording operation for recording broadcast signals (contents) selected and descrambled by the tuners 1031-1037 in one of the multiple storage media (e.g., HDDs 290-292) according to default recording control information stored in the nonvolatile memory 261c and information of a power-on operation time (including an idling time) that is stored in each storage medium itself. The control for a recording operation will be described later in detail.

For example, each of the HDDs 290-292 has a top cover that is covered with a surface metal member produced by aluminum die casting or the like and a base chassis made of a metal material and produced also by aluminum die casting or the like. In each of the HDDs 290-292, multiple magnetic disks of about 1 to 3.5 inches, for example, magnetic heads for reading and writing on the magnetic disks, and a drive unit such as a motor for rotationally driving the magnetic disks are disposed inside the top cover. In the embodiment, as an example combination, the HDD 290 includes multiple magnetic disks of about 2.5 inches and the HDD 291 includes multiple magnetic disks of about 3.5 inches.

The nonvolatile memory 261 is stored with the above-mentioned default recording control information. The default recording control information includes first recording control information to be used for recording contents in a first storage medium (e.g., HDD 290) in first recording processing (e.g., program-designated recording) and second recording control information to be used for recording contents in a second storage medium (e.g., HDD 291) in second recording processing (e.g., multiple simultaneous recording). The program-designated recording is processing of recording a program that has been designated by the user using the remote controller 117, and is also called PVR (personal video recording).

Each of the HDDs 290-292 is stored with information of a power-on operation time including an idling time of such components as the motor. For example, "power-on-hours-count" information that is one item of S.M.A.R.T. (self-monitoring, analysis and reporting technology) information is used as the power-on operation time information. The power-on-hours-count information indicates the sum (accumulative time) of energization time (power-on time) of the HDD from the shipment from a factory. More specifically, the power-on-hours-count information indicates operation times including not only times during which the HDD performed a recording operation or a playback operation but also time elapsed in a state (idling state) that the HDD did not perform a recording operation or a playback operation though it was energized, and an accumulative time of those operation times. The recording control module 261d used in the embodiment detects pieces of operation time information that are stored in the multiple respective storage media.

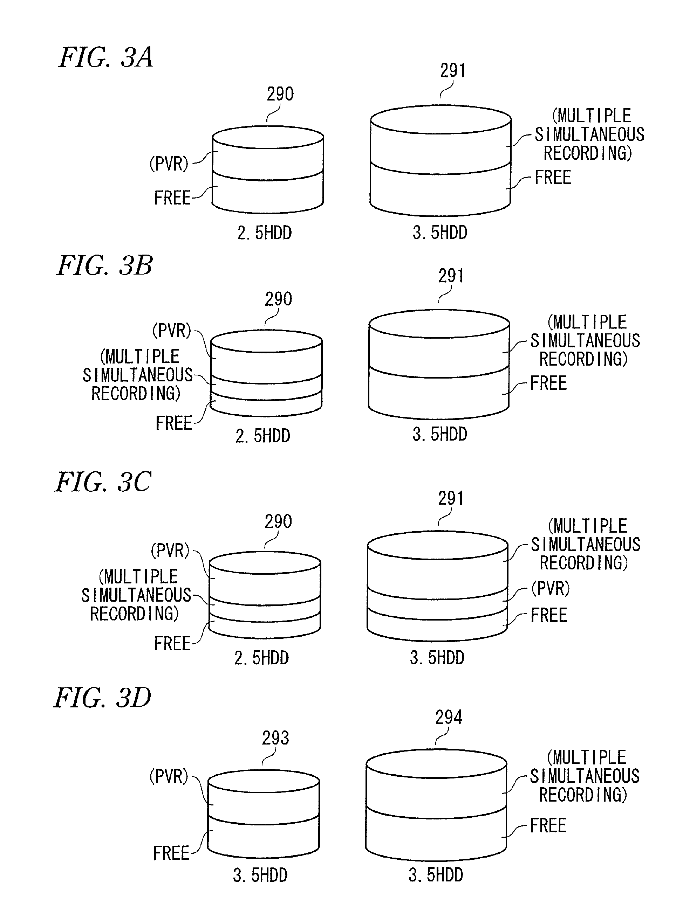

Next, an example control for a recording operation that is performed according to the default recording control information and the pieces of operation time information will be described with reference to Figs. 3A-3D.

As shown in Fig. 3A, the HDD 290 is a 2.5-inch HDD and the HDD 291 is a 3.5-inch HDD. The 3.5-inch HDD has a larger storage capacity than the 2.5-inch HDD. Since more contents would be stored for a longer time in the multiple simultaneous recording than in the program-designated recording, the multiple simultaneous recording requires a larger storage capacity than the program-designated recording. In view of this, the default recording control information indicates that the HDD 290 (2.5-inch HDD) should be assigned to the program-designated recording (PVR) and the HDD 291 (3.5-inch HDD) should be assigned to the multiple simultaneous recording.

The recording control module 261 d detects the pieces of operation time information of the multiple storage media (HDDs), and determines, as a content recording destination, a storage medium that is determined relatively long in remaining lifetime from among the multiple storage media, and performs a control so that contents will be stored preferentially in the determined storage medium. The remaining lifetime is a time to the end of an operation assurance time.

Incidentally, the operation assurance time of an HDD, which is set by its maker, varies from one product type to another. For example, in the embodiment, assume that the HDD 290 (2.5-inch HDD) has an operation assurance time of 33,000 hours and the HDD 291 (3.5-inch HDD) has an operation assurance time of 30,000 hours. Since as mentioned above more contents would be stored for a longer time in the multiple simultaneous recording than in the program-designated recording, the HDD 291 would operate longer than the HDD 290.

In view of the above, the recording control module 261d performs a recording control in the following manner according to the pieces of power-on operation time information of the HDDs 290 and 291.

More specifically, for example, the recording control module 261d compares the accumulative power-on operation times of the respective HDDs 290 and 291 using the pieces of power-on-hours-count information each of which is one item of the S.M.A.R.T. information. That is, the recording control module 261d determines an HDD having a smaller accumulative operation times as a storage media that having a longer remaining lifetime. If the accumulative power-on operation times of the HDDs 290 and 291 are smaller than prescribed values (threshold values), that is, if the accumulative power-on operation times of the HDDs 290 and 291 are sufficiently smaller than their respective operation assurance times, the recording control module 261 d performs a recording control according to the default recording control information.

Therefore, at the beginning, the HDDs 290 and 291 are assigned to the program-designated recording and the multiple simultaneous recording, respectively. After the accumulative operation time of the HDD 290 or 291 has exceeded the prescribed value, the recording control module 261 d determines, as a content recording destination, one, having a longer remaining lifetime, of the HDDs 290 and 291 (i.e., a storage medium having a smaller accumulative operation times). For example, if the accumulative operation times of the HDD 290 is smaller than that of the HDD 291, as shown in Fig. 3B the recording control module 261 d switches the recording destinations of all or part of multiple simultaneous recording contents from the HDD 291 to the HDD 290. In this case, the recording control module 261d may cause recording of contents in the HDD 290 in multiple simultaneous recording time slots that do not overlap with any program-designated recording time slot.

The recording control module 261d may determine, as a storage medium having a longer remaining lifetime, an HDD that is smaller in the ratio of the accumulative power-on operation time to the operation assurance time. As in the above-described case, if the accumulative operation times of the HDDs 290 and 291 are sufficiently smaller than the respective HDD operation assurance times, the recording control module 261d performs a recording control according to the default recording control information.

Therefore, at the beginning, the HDDs 290 and 291 are assigned to the program-designated recording and the multiple simultaneous recording, respectively. After the ratio of the accumulative operation time to the operation assurance time of the HDD 290 or 291 has exceeded a prescribed value, the recording control module 261d assumes one, having a smaller ratio of the accumulative operation time to the operation assurance time, of the HDDs 290 and 291 as a storage medium having a longer remaining lifetime and determines it as a content recording destination. For example, if the ratio of the accumulative operation time of the HDD 290 is a little larger than 50% (threshold value) and that of the HDD 291 is 80%, as shown in Fig. 3B the recording control module 261d switches the recording destinations of all or part of multiple simultaneous recording contents from the HDD 291 to the HDD 290. In this case, the recording control module 261d may cause recording of contents in the HDD 290 in multiple simultaneous recording time slots that do not overlap with any program-designated recording time slot.

As shown in Fig. 3C, the recording control module 261d may dynamically change the corresponding relationship between the HDD 290 and 291 and the recording modes (multiple simultaneous recording and program-designated recording). That is, the recording control module 261d may sometimes cause multiple simultaneous recording programs to be recorded in the HDD 290 and program-designated recording programs to be recorded in the HDD 291.

As described above, where the TV broadcast receiving apparatus 111 is equipped with multiple HDDs (in the embodiment, the HDDs 290 and 291) having different storage capacities and operation assurance times, the content recording destination is selected according to the pieces of operation time information of the respective HDDs. As a result, the accumulative operation times of the respective HDDs can be averaged and hence the lifetime of each HDD can be elongated.

In the embodiment, the TV broadcast receiving apparatus 111 selects a prescribed storage medium from the incorporated HDDs 290 and 291 according to various conditions including the pieces of operation time information and causes recording of information in the selected storage medium. However, the invention is not limited to such a case. For example, the invention can also be applied to a TV broadcast receiving apparatus in which a recording destination storage medium is determined from among storage devices including a built-in nonvolatile memory such as an SSD or a flash memory that does not have a motor, a disk, or the like and an external storage medium (e.g., HDD 292) according to the pieces of operation time information of the respective storage media and other information and various contents are recorded in the thus-determined storage medium.

Although in the embodiment the HDDs (e.g., HDDs 290 and 291) have different disk sizes and capacities, as shown in Fig. 3D the invention can also be applied to a case of using HDDs 293 and 294 having the same disk size and capacity.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and the method described herein may be made without departing from the sprit of the invention. The accompanying claims and their equivalents are intended to cover such forms or modifications as would fall within the scope and sprit of the invention.

## Claims

1. A recording control apparatus comprising:
a recording control module configured to detect operation time information comprising time information of idling condition of each of a plurality of storage media, to determine a given storage medium having a relatively long remaining lifetime from among the plurality of storage media based on the operation time information, and to control the given storage medium to preferentially record contents.

2. The apparatus of Claim 1,
wherein the plurality of storage media comprises at least a first storage medium and a second storage medium,
wherein the recording control apparatus further comprises:
a memory configured to store default recording control information, the default recording control information comprising first recording control information for recording contents in the first storage medium with respect to first recording processing and second recording control information for recording contents in the second storage medium with respect to second recording processing, and
wherein the recording control module is configured to switch a content recording destination with respect to the second recording processing from the second storage medium to the first storage medium according to the operation time information of the first storage medium and the second storage medium.

3. The apparatus of Claim 1 or 2, wherein the recording control module is configured to determine the given storage medium by selecting one of the first storage medium and the second storage medium which has less accumulation operation time than the other.

4. The apparatus of Claim 1 or 2, wherein the recording control module is configured to determine the given storage medium by selecting one of the first storage medium and the second storage medium which has a smaller ratio of an accumulative operation time with respect to an operation assurance time than the other.

5. The apparatus of Claim 2, wherein the first recording processing comprises program-designated recording processing; and
the second recording processing comprises simultaneous recording processing on multiple channels.

6. The apparatus of Claim 2, wherein the first storage medium comprises a disk of a first size driven by a motor; and
the second storage medium comprises a disk of a second size driven by a motor, the second size being larger than the first size.

7. The apparatus of Claim 2, wherein the first storage medium comprises a disk of a first size driven by a motor; and
the second storage medium comprises a disk of a second size driven by a motor, the second size being the same as the first size.

8. The apparatus of Claim 1, wherein the operation time information is stored in the each of plurality of storage media.

9. A recording control method comprising:
detecting operation time information comprising time information of idling condition of each of a plurality of storage media;
determining a given storage medium having a relatively long remaining lifetime from among the plurality of storage media based on the operation time information; and
controlling the given storage medium to preferentially record contents.

## Amended claims

### Amended claims in accordance with Rule 137(2) EPC.

**1.** A recording control apparatus comprising:
a storage module (261c) configured to store default recording control information comprising first recording control information for recording contents in a first storage medium (290) with respect to program-designated recording, and second recording control information for recording contents in a second storage medium (291) with respect to simultaneous automatic recording on multiple channels;
a detecting module configured to detect energization time information comprising time information of idling condition to be stored in each of a plurality of storage media (290, 291) comprising at least the first storage medium (290) and the second storage medium (291); and
a recording control module (261d) configured to control the first and second storage media (290, 291) to record contents,
wherein the recording control module (261d) is configured to control a storage medium having a small accumulative value of energization time comprising the idling condition between the first storage medium and the second storage medium to preferentially record contents when any one of the energization times comprising the respective idling condition of the first and second storage media exceeds a prescribed value.

**2.** The apparatus of Claim 1, further comprising: a plurality of tuners corresponding to the multiple channels.

**3.** The apparatus of Claim 1, wherein the first storage medium (290) comprises a disk of a first size driven by a motor; and
the second storage medium (291) comprises a disk of a second size driven by a motor, the second size being larger than the first size.

**4.** The apparatus of Claim 1, wherein the first storage medium comprises a disk of a first size driven by a motor; and the second storage medium comprises a disk of a second size driven by a motor, the second size being the same as the first size.

**5.** A recording control method for recording contents in a plurality of storage media, comprising:
controlling first and second storage media to record contents based on default recording control information comprising first recording control information for recording contents in a first storage medium with respect to program-designated recording, and second recording control information for recording contents in a second storage medium with respect to simultaneous automatic recording on multiple channels;
detecting energization time information comprising idling condition of each of a plurality of storage media comprising at least the first storage medium and the second storage medium; and
controlling a storage medium having a small accumulative value of energization time comprising the idling condition between the first storage medium and the second storage medium to preferentially record contents when any one of the energization times comprising the respective idling condition of the first and second storage media exceeds a prescribed value.
